# EUROPEAN PATENT APPLICATION

(11) **EP 3 872 195 A1**
(43) Date of publication of application: **01.09.2021**
(21) Application number: 19950239.4
(22) Date of filing: 31.12.2019
(51) Int. Cl.: C21D 1/26, C21D 8/12, C21D 6/00, C21D 9/52, C22C 38/04, H02K 1/02

(54) **NON-ORIENTED ELECTRICAL STEEL, PREPARATION METHOD THEREFOR AND USE THEREOF**

(30) Priority: 27.12.2019 CN 201911382425
(71) Applicant: Shougang Zhixin Qian'an Electromagnetic Material Co., Ltd., Tangshan, Hebei 064400 (CN)
(72) Inventor: The designation of the inventor has not yet been filed
(74) Representative: Sach, Greg Robert
(86) International application number: PCT/CN2019/130294
(87) International publication number: WO 2021/128409

(57) **Abstract**

The disclosure discloses a non-oriented electrical steel and preparation method and application thereof. The chemical components and the mass fractions of the chemical components of the non-oriented electrical steel are: C≤0.0040%; Si: 1.8∼4.00%, Al: 0.30∼1.20%; Mn: 0.40∼1.0%; Ni: 0.50∼2.0%; Cr: 0.50∼2.0%; Sn: 0.010∼0.10%; S≤0.0020%; N≤0.002%; V≤0.005%; Ti≤0.005%; P≤0.002%; a sum of the mass fractions of Ga and Hf ≤0.7%, and the rest is Fe and inevitable impurities. By adopting the composition design and the preparation process of the disclosure, the obtained non-oriented electrical steel has good comprehensive performances in iron loss, magnetic induction, mechanical properties and the like, no strip breakage problems during production, and the reliability and efficiency of the motor core are improved.

## Description

### CROSS REFERENCES TO RELATED APPLICATIONS

This application claims the priority of the Chinese patent application filed on December 27, 2019, with the application number No. 201911382425.2 and entitled "non-oriented electrical steel and preparation method and application thereof", the entire content of which is incorporated herein by reference.

### TECHNICAL FIELD

This application relates to the technical field of non-oriented electrical steel, in particular to a non-oriented electrical steel and preparation method and application thereof.

### BACKGROUND OF THE INVENTION

Non-oriented electrical steel is a silicon-iron alloy containing very low carbon, and is an important soft magnetic functional material which cannot be absent from electric power, electronics and military industries. After deformation and annealing, the grains in a steel sheet are distributed in non-regular orientations. Non-oriented electrical steel is the core material of a stator and rotor of a motor and generator operating in a rotating magnetic field, thus requiring good magnetic properties and process performance.

As the efficiency of motor application requirements are increasingly strict, especially for drive motors of new energy vehicles, on which extremely higher requirements are imposed in comparison with industrial motors, including characteristics of large torque, high efficiency, small mass, high rotating speed and the like. Therefore, the non-oriented electrical steel as a motor core material needs to have good comprehensive performances such as high strength, low iron loss and high magnetic induction intensity and the like.

In order to achieve good comprehensive performances of non-oriented electrical steel, a method for adding solid solution elements such as Cr and Ni is currently adopted, so that the strength of non-oriented electrical steel is improved meanwhile the magnetic induction is increased. However, the method has the problems that strip breakages are prone to occurring in hot rolling and cold rolling during the production process.

### SUMMARY OF THE INVENTION

In view of the above-mentioned deficiencies of the existing technology, the embodiments of the disclosure provide a non-oriented electrical steel and preparation method and application thereof. which solve the problem in existing technology that the electrical steel used as a motor core is prone to break during production, and the yield of the non-oriented electrical steel is low, on the premise of ensuring good comprehensive performance of the non-oriented electrical steel.

In a first aspect of the disclosure, a non-oriented electrical steel is provided, and chemical components and mass fractions of the chemical components of the non-oriented electrical steel are:

C≤0.0040%; Si: 1.8∼4.00%, Al: 0.30∼1.20%; Mn: 0.40∼1.0%; Ni: 0.50∼2.0%; Cr: 0.50∼2.0%; Sn: 0.010∼0.10%; S≤0.0020%; N≤0.002%; V≤0.005%; Ti≤0.005%; P≤0.002%; a sum of mass fractions of Ga and Hf ≤0.7%, the rest is Fe and unavoidable impurities.

In some embodiments, the chemical components and the mass fractions of the chemical components of the non-oriented electrical steel are:

C≤0.002%; Si: 2∼3.5%, Al: 0.4∼1.0%; Mn: 0.5∼0.7%; Ni: 0.6∼1.0%; Cr: 0.6∼1.0%; Sn: 0.02∼0.08%; S≤0.0015%; N≤0.002%; V≤0.005%; Ti≤0.005%; P≤0.002%; the sum of the mass fractions of Ga and Hf ≤0.7%, the rest is Fe and inevitable impurities.

In a second aspect of the disclosure, a method for preparing non-oriented electrical steel is provided , the method comprising:
casting molten steel sequentially subjected to converter smelting and vacuum treatment to obtain a slab; chemical components and the mass fractions of the chemical components of the slab are: C≤0.0040%; Si: 1.8∼4.00%, Al: 0.30∼1.20%; Mn: 0.40∼1.0%; Ni: 0.50∼2.0%; Cr: 0.50∼2.0%; Sn: 0.010∼0.10%; S≤0.0020%; N≤0.002%; V≤0.005%; Ti≤0.005%; P≤0.002%; a sum of mass fractions of Ga and Hf ≤0.7%, the rest is Fe and inevitable impurities;
sequentially heating, rough rolling, finish rolling and coiling the slab to obtain a hot-rolled coil;
sequentially performing normalizing treatment, acid pickling and primary cold rolling on the hot-rolled coil to obtain a primary cold-rolled coil;
continuously annealing the primary cold-rolled coil to obtain a non-oriented electrical steel; in the continuous annealing, an annealing tension is 5∼15MPa, an elongation is 0.5∼10%, a cooling rate is 30∼80°C/s, and a final cooling temperature is 40∼100°C.

In some embodiments, during the heating, a heating temperature is 1000∼ 1080°C, and a soaking time is 20 ∼ 50 min.

In some embodiments, a starting temperature of the finish rolling is 850∼1000°C, a finishing temperature of the finish rolling is 820∼920°C, and a temperature of the coiling is 500∼750°C, and a thickness of the hot-rolled coil is 2.0∼2.6mm.

In some embodiments, in the normalizing treatment, a normalizing temperature is 850∼950°C, a holding time is 0.5∼4min, a cooling rate is 10∼40°C/s, and a final cooling temperature is 40∼100°C.

In some embodiments, the continuously annealing the primary cold-rolled coil includes: sequentially performing continuous annealing and secondary cold rolling on the primary cold-rolled coil, a reduction ratio of the secondary cold rolling is 3-30%.

In some embodiments, in the continuous annealing, a continuous annealing temperature is 900 ∼ 1000° C., and a soaking time is 0.3 ∼ 2 min.

In some embodiments, a dislocation density of the non-oriented electrical steel is 1 × 10¹⁴ ∼ 1 × 10¹⁷ pieces/m².

In a third aspect of the disclosure, an application of non-oriented electrical steel as a motor core is provided.

The beneficial effects of the disclosure at least include:
The disclosure provides a non-oriented electrical steel and a preparation method and application thereof. The chemical components and the mass fractions of the chemical components of the non-oriented electrical steel are: C≤0.0040%; Si: 1.8 ∼4.00%, Al: 0.30∼1.20%; Mn: 0.40∼1.0%; Ni: 0.50∼2.0%; Cr: 0.50∼2.0%; Sn: 0.010∼0.10%; S≤0.0020%; N≤0.002%; V≤0.005%; Ti≤0.005%; P≤0.002%; the sum of the mass fractions of Ga and Hf≤0.7%, the rest is Fe and unavoidable impurities. The components design of the non-oriented electrical steel of the disclosure adds Ga and Hf elements; the Ga and Hf elements have a strong binding force with oxygen and sulfur, which can modify and harmless-treat the inclusions in the molten steel to further purify the molten steel and improve cleanliness of the steel, thereby improving magnetic induction of the non-oriented electrical steel, reducing iron loss. Ga and Hf elements can also segregate at grain boundaries to refine the grains and improve the strength, plasticity, toughness and fatigue strength of non-oriented electrical steel; at the same time, a small amount of solid solution elements of Ni, Mn, Al and Cr and the like are added, which can not only improve the strength of the non-oriented electrical steel, but also solve the problem of strip breakage in production caused by excessive addition of alloy elements during hot rolling and cold rolling in the existing technologies. As the harmful elements such as C, S, N, Ti, V and the like in the steel are controlled at a low level, it is ensured that the iron loss of the non-oriented electrical steel is not significantly deteriorated, and a non-oriented electrical steel with excellent comprehensive performance of iron loss, magnetic induction and mechanical properties and the like can be obtained through a smooth production process.

### BRIEF DESCRIPTION OF THE DRAWINGS

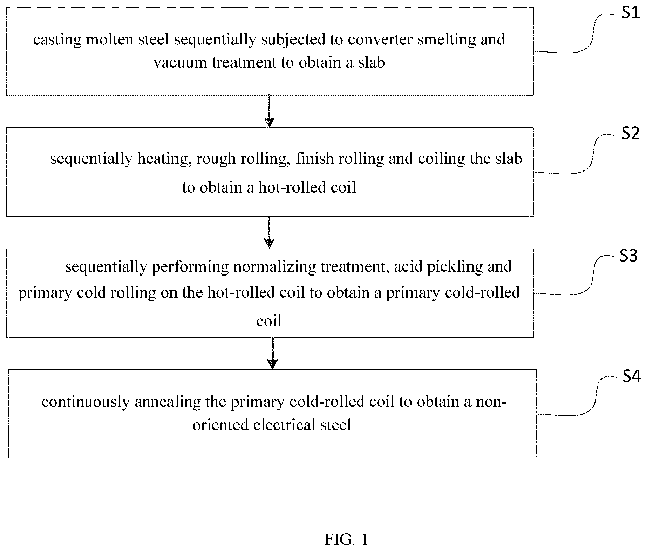

FIG. 1 is a flow diagram showing process steps of a method for preparing non-oriented electrical steel according to an embodiment of the disclosure.

### DETAILED DESCRIPTION OF THE INVENTION

The disclosure will be described in detail in combination with specific embodiments and examples, from which the advantages and various effects of the disclosure will be presented more clearly. Those skilled in the art should understand that these specific embodiments and examples are used to illustrate the disclosure, but not to limit the disclosure.

Throughout the specification, unless otherwise specified, the terms used herein should be understood as having meanings commonly used in the art. Therefore, unless otherwise defined, all technical and scientific terms used herein have the same meanings as those commonly understood by those skilled in the art to which the disclosure belongs. If there is a conflict, the description in this specification takes precedence.

Unless otherwise specified, the various raw materials, reagents, instruments, and devices used in the disclosure can be purchased from the market or can be prepared by existing methods.

In one aspect of the disclosure, a non-oriented electrical steel is provided, chemical components and mass fractions of the chemical components of the non-oriented electrical steel are:
C≤0.0040%; Si: 1.8∼4.00%, Al: 0.30∼1.20%; Mn: 0.40∼1.0%; Ni: 0.50∼2.0%; Cr: 0.50∼2.0%; Sn: 0.010∼0.10%; S≤0.0020%; N≤0.002%; V≤0.005%; Ti≤0.005%; P≤0.002%; the sum of the mass fractions of Ga and Hf ≤0.7%, and the rest is Fe and inevitable impurities.

In some embodiments, the chemical components and the mass fractions of the chemical components of the non-oriented electrical steel are:
C≤0.002%; Si: 2∼3.5%, Al: 0.4∼1.0%; Mn: 0.5∼0.7%; Ni: 0.6∼1.0%; Cr: 0.6∼1.0%; Sn: 0.02∼0.08%; S≤0.0015%; N≤0.002%; V≤0.005%; Ti≤0.005%; P≤0.002%; the sum of the mass fractions of Ga and Hf≤0.7%, and the rest is Fe and inevitable impurities.

As to C, C is a main element that produces magnetic aging in electrical steels. When the residual C content in the steel is high, the coercive force increases, the hysteresis loss increases, and also, the magnetic aging is produced. Therefore, it is required that C≤0.0040%, preferably C≤0.002%.

As to Si, Si is mainly used to increase electrical resistivity and reduce eddy current loss Pe. Si reduces the magnetic anisotropy constant and saturation magnetostriction constant of Fe, resulting in a decrease in hysteresis loss Ph. Thus, adding Si can significantly reduce iron core loss Pt, while reducing the magnetostriction of electrical steel. When the Si content is increased to 6.5%, the magnetostriction is close to zero. However, when the Si content is increased to 3.5% or more, the plasticity of the strip steel is greatly reduced, resulting in poor rollability. Therefore, the Si content is required to be controlled within 1.8∼4.00%, preferably 2∼3.5%.

As to Al, Al plays a role in increasing the electrical resistivity and strength of non-oriented electrical steel. When the content of Al is increased, the magnetic induction intensity is reduced, so that a size of the precipitated phase containing AlN is coarsened, which is favorable to the coarsening of crystal grains. Thus, the Al content is controlled within 0.30∼1.20%, preferably 0.4∼1.0%.

As to Mn, Mn has a similar role as Si, increasing strength while reducing iron loss, and its main role is to increase electrical resistivity and coarsen sulfide. However, excessive addition of Mn reduces saturation magnetic induction. Therefore, Mn content is 0.40∼ 1.0%, preferably 0.5∼0.7%.

As to Ni, Ni and Fe are all ferromagnetic elements, playing a solid solution strengthening effect, while minimizing the impact on magnetic properties. Ni is also considered to have the effect of fixing dislocations to a certain extent. On the one hand, the addition of Ni to the high-alloy Si steel can play a role in improving high-temperature plasticity. Therefore, the addition amount of Ni in the disclosure is 0.50∼2.0%, preferably 0.6∼1.0%.

As to Cr, Cr can increase the electrical resistivity of steel and has a significant effect in reducing high-frequency iron loss. At the same time, adding Cr can also improve corrosion resistance. If the addition amount of Cr exceeds 3.0%, the increase of Cr carbides will worsen the iron loss. In view of cost and adverse effects on magnetic properties, in the disclosure, the addition amount of Cr is set to be 0.50∼2.0%, preferably 0.6∼1.0%.

As to Sn, the addition of the segregation element Sn generally plays a role of an interface and surface segregation, and improve the texture type during the recrystallization process, thereby increasing magnetic induction. In the disclosure the Sn content is set to be 0.010∼0.10%, preferably 0.02∼0.08%.

As to S, in the non-oriented electrical steel, element S is a main element for forming precipitation phase, mainly in the form of MnS and CuS. Such sulfides hinder the growth of crystal grains and worsen iron loss. Therefore, in the disclosure, the S content is set to be ≤0.0020%, preferably ≤0.0015%.

As to N, N degrades magnetic properties as C, so it is set to be 0.002% or less.

As to V, V is a harmful element in the non-oriented electrical steel of the disclosure. V is a strong carbonitride forming element, which easily forms fine precipitates and deteriorates the level of magnetic performance. Therefore, the content of V is controlled to be ≤ 0.005% in the disclosure.

As to Ti, Ti as a strong carbonitride forming element, it is easy to form fine precipitates in the non-oriented electrical steel and deteriorate magnetic properties. It has a significant effect in improving strength, but it also has a significant effect in deteriorating iron loss. Usually Ti Like V, is a harmful element in the electrical steel. Therefore, the content of Ti in the disclosure is controlled to be ≤0.005%.

As to P, P is a strong grain boundary segregation element. An increase in P content will cause embrittlement of electrical steel, resulting in poor processing performance. Therefore, the content of P is controlled to be ≤ 0.002% in the disclosure.

As to Ga and Hf elements, Ga and Hf elements have a strong binding force with oxygen and sulfur, which can modify and make the inclusions in the molten steel harmless, further purifying molten steel, improving the cleanliness of the steel, and thereby improving the magnetic induction of the non-oriented electrical steel and reducing the iron loss. Ga and Hf elements can also segregate at the grain boundaries to refine the grains, and at the same time improve the strength, plasticity, toughness and fatigue strength of the non-oriented electrical steel, so as to avoid problems such as strip breakage, edge cracks during hot or cold rolling, improving the rollability of the non-oriented electrical steel and increasing the yield of finished product. When the total mass fractions of the two exceeds 0.7%, the effect of improving the performance of electrical steel is weakened, so the sum of the mass fractions of Ga and Hf is controlled to be ≤0.7% in the disclosure.

In the second aspect of the disclosure, a method for preparing non-oriented electrical steel is provided. FIG. 1 is a flow diagram showing process steps of a method for preparing non-oriented electrical steel according to an embodiment of the disclosure. Referring to FIG. 1, the method includes:
S1, casting molten steel sequentially subjected to converter smelting and vacuum treatment to obtain a slab, wherein
   after converter smelting and vacuum treatment, the molten steel whose components meets the qualified chemical components of non-oriented electrical steel is cast, so that the molten steel is changed from a liquid to a slab material that meets the rolling requirements; and
S2, sequentially heating, rough rolling, finish rolling and coiling the slab to obtain a hot-rolled coil.

In some embodiments, during the heating, a heating temperature is 1000∼ 1080°C, and a soaking time is 20 ∼50 min.

The slab is heated to increase the temperature of the slab so as to preform rough rolling and finish rolling. The heating temperature and soaking time should not be too high or too low. If the heating temperature and soaking time are too high or too long, on one hand, it will cause a waste of heat; on the other hand, it may cause the slab to bend and fail to be rolled normally on a track of a rolling mill; also, it may cause excessive oxide scale created on a surface of the slab and cause serious iron loss. If the heating temperature is too low and the soaking time is too short, the slab will not burn well and cannot reach the rolling temperature.

In some embodiments, an starting temperature of the finish rolling is 850∼1000°C, a finishing temperature of the final finish rolling is 820∼920°C, a temperature of the coiling is 500∼750°C, and a thickness of the hot-rolled coil is 2.0∼2.6 mm. After specific heating, rough rolling, finish rolling and coiling processes, a hot-rolled coil with good plate shape and good appearance is obtained.

The method may further include S3, sequentially performing normalizing treatment, acid pickled and primarily cold rolling on the hot-rolled coil to obtain a cold-rolled coil.

In some embodiments, in the normalizing treatment, a normalizing temperature is 850∼950°C, a holding time is 0.5∼4 min, a cooling rate is 10∼40°C/s, and a final cooling temperature is 40∼100°C. The normalizing treatment can recrystallize the hot-rolled coil, make the crystal grain more uniform and the mechanical properties more stable.

In some embodiments, a reduction ratio of the primary cold rolling is 70%∼ 93%. The primary cold rolling is carried out in a twenty-high rolling mill.

The method may further include S4, continuously annealing the primary cold-rolled coil to obtain the non-oriented electrical steel; in the continuous annealing, an annealing tension is 5 ∼ 15 MPa, an elongation is 0.5 ∼ 10%, a cooling rate is 30 to 80 °C/s, and a final cooling temperature is 40∼100°C.

In some embodiments, in the continuous annealing, a continuous annealing temperature is 900 ∼ 1000° C, and a soaking time is 0.3 ∼ 2 min. In the continuous annealing, the annealing tension in the furnace is controlled to be 5∼15 MPa, which can stretch the primary cold-rolled coil, and will not cause strip breakage, so that the cold-rolled coil has a small deformation with an elongation of 0.5∼10%. With the elongation with the small deformation in combination with the cooling rate of 30∼80 °C/s which leads to quickly cooling to 40∼100°C, the work hardening caused by the elongation of the small deformation can be retained under the condition of rapid cooling, which increases dislocation density of the steel strip after continuous annealing, and the increase of the dislocation density will improve the strength level of the steel strip. At the same time, under the above-mentioned rapid cooling conditions, the precipitation of harmful second phases such as MnS is also suppressed, which improves the magnetic properties of the non-oriented electrical steel. On the other hand, the annealing temperature of the disclosure is higher than a conventional annealing temperature. With conventional dislocation strengthening technology, the annealing temperature generally adopts low-temperature annealing, and the low-temperature annealing temperature is 750∼850°C. The existing industrial furnaces have poor stability in controlling low-temperature annealing. As a result, the mechanical properties of the produced non-oriented electrical steel are not uniformly distributed in the entire steel strip. However, the disclosure adopts a high-temperature annealing process; since the existing industrial furnaces have good stability in controlling high-temperature annealing, so that the mechanical properties of the produced non-oriented electrical steel are distributed uniformly throughout the whole range of the steel strip and have a wide range of applications.

In some embodiments, the continuously annealing of the primary cold-rolled coil includes: sequentially performing continuous annealing and secondary cold rolling on the primary cold-rolled coil, and a reduction ratio of the secondary cold rolling is 3∼30%.

The primary cold-rolled coil after continuous annealing is subjected to secondary cold rolling with a small amount of deformation in a reduction ratio of 3 ∼ 30%. The slight deformation caused by the small amount of deformation can increase the dislocation density of the steel strip, and thus further increase the strength of the non-oriented electrical steel. At the same time, the secondary cold rolling with small amount of deformation can also improve the shape of the steel strip . The secondary cold rolling can be carried out on a twenty-high rolling mill or in a continuous rolling mill group.

In some embodiments, the dislocation density of the non-oriented electrical steel is 1 × 10¹⁴ ∼ 1 × 10¹⁷ pieces/m².

A right dislocation density will increase the strength of the non-oriented electrical steel. Too high or too low dislocation density is not good. If the dislocation density is too high, the strength is too high, which may lead to reduced plasticity and highly-deteriorated magnetic properties of a finished product. If the dislocation density is too small, the strength of the non-oriented electrical steel is insufficient, which cannot meet the strength requirements of the motor core and affects the operation of the motor.

In a third aspect of the disclosure, an application of non-oriented electrical steel as a motor core is provided.

According to the disclosure, a small amount of Ni, Mn, Al and Cr solid solution elements are added to replace Si element, so as to achieve solid solution strengthening and improve the level of strength while ensuring rollability. At the same time, the harmful elements such as C, S, N, Ti and V in the steel are controlled to be in a low level, ensuring that the iron loss of the non-oriented electrical steel does not deteriorate significantly. Adding Ga and Hf elements can modify and make harmless of the inclusions in the molten steel, improving the cleanliness of the steel, and thereby improving the magnetic induction of the non-oriented electrical steel, and reducing the iron loss. In addition, the crystal grains can be also refined, thereby improving the strength, plasticity and toughness of the non-oriented electrical steel. Coupled with a specific annealing process and secondary cold rolling, the produced non-oriented electrical steel has high dislocation density and high strength level, being produced stably without strip breakage problems, and the non-oriented electrical steel has good plate shape and stable magnetic properties. When it is used as the motor core of new energy vehicles, it has high fatigue strength; thus it is not easy to fail and has a long service life during the running of new energy vehicles.

The technical solutions of the disclosure will be further described below in combination with specific examples.

### Example

As shown in FIG. 1, a non-oriented electrical steel and a preparation method thereof is provided. The method includes:
S1, casting molten steel sequentially subjected to converter smelting and vacuum treatment to obtain a slab;
S2, sequentially heating, rough rolling, finish rolling and coiling the slab to obtain a hot-rolled coil;
S3, sequentially performing normalizing treatment, acid pickled and a primary cold rolling on the hot-rolled coil to obtain a primary cold-rolled coil; and
S4, continuously annealing the primary cold-rolled coil to obtain a non-oriented electrical steel.

In the example, firstly, the components are optimized. The components are controlled as shown in Table 1.

**Table 1**

| No. | C/% | Si/% | S/% | N/% | V/% | Ti/% | Al/% | Mn/% | Ni/% | Cr/% | Sn/% | Ga/% | Hf/% | P/% |
|---|---|---|---|---|---|---|---|---|---|---|---|---|---|---|
| 1 | 0.0009 | 2.9 | 0.0009 | 0.0012 | 0.0038 | 0.0015 | 0.8 | 0.51 | 0.8 | 0.7 | 0.08 | 0.3 | 0.2 | 0.0013 |
| 2 | 0.0013 | 3.2 | 0.0007 | 0.0015 | 0.0042 | 0.0033 | 0.6 | 0.55 | 0.7 | 0.9 | 0.06 | - | 0.5 | 0.0011 |
| 3 | 0.0009 | 3.3 | 0.0010 | 0.0018 | 0.0043 | 0.0016 | 0.9 | 0.69 | 0.9 | 0.8 | 0.05 | 0.5 | - | 0.0016 |
| 4 | 0.0006 | 2.4 | 0.0012 | 0.0009 | 0.0045 | 0.0042 | 0.7 | 0.53 | 0.6 | 0.92 | 0.07 | 0.2 | 0.2 | 0.0012 |
| 5 | 0.0010 | 3.1 | 0.0008 | 0.0015 | 0.0036 | 0.0020 | 0.5 | 0.65 | 0.6 | 0.85 | 0.04 | 0.3 | 0.3 | 0.0018 |
| 6 | 0.0025 | 3.0 | 0.0015 | 0.001 | 0.005 | 0.001 | 0.56 | 0.65 | 1.0 | 1.0 | - | - | - | 0.0015 |
| 7 | 0.0013 | 3.2 | 0.0018 | 0.001 | 0.001 | 0.0015 | 0.75 | 0.79 | 0.8 | 1.0 | - | - | - | 0.0013 |
| 8 | 0.0015 | 3.5 | 0.0018 | 0.001 | 0.004 | 0.002 | 0.5 | 0.6 | 0.8 | 0.7 | 0.05 | - | - | 0.0018 |

During the composition optimization, after the slab is heated and held at 1080°C, a starting temperature of the finish rolling is 910°C, a finishing temperature of the finish rolling is 880°C, a coiling temperature is 560°C, and a hot-rolled coil of the thickness of 2.6mm is obtained. After a normalizing treatment by heating at 920°C and holding for 60s, at a cooling rate of 30°C/S, and with a final cooling temperature of 60°C, the hot-rolled coil is subjected to acid pickling and a primary cold rolling to obtain a primary cold-rolled coil with a thickness of 0.35 mm and a reduction ratio of 86.53%. After the primary cold-rolled coil undergoes an annealing process with a temperature of 950°C, a holding time of 30s, a cooling rate of 40°C/s, and a final cooling temperature of 60°C, an non-oriented electrical steel is obtained. According to the requirements of GB/T 3655-2008, the magnetic properties of the finished product of the non-oriented electrical steel are tested by Epstein frame method. According to the requirements of GB/T228.1, the mechanical properties of the specimens are tested by a universal tensile machine. According to the requirements of ISO 1099-2017, a dynamic mechanical testing machine is used to test the fatigue strength. Table 2 shows corresponding test results of the non-oriented electrical steel with the compositions in Table 1. According to the test results in Table 2, Sn element (0.010∼0.10%) is added in the chemical components designs of No. 1 to No. 5, and Ga and Hf elements are added at the same time (the sum of the mass fractions of Ga and Hf ≤ 0.7%). The strip breakage ratio is zero, improving the rollability of the non-oriented electrical steel and increasing the yield rate.

It should be noted that the strip breakage ratio in cold rolling mentioned in the disclosure includes the ratio of the total number of strip breakages in each pass of the primary cold rolling and in each pass of the secondary cold rolling.

**Table 2**

| No. | B5000 (T) | P1.5/50 (W/kg) | P1.0/400 (W/kg) | Rp0.2 (MPa) | Cold rolling strip breakage ratio (%) | Fatigue strength (MPa) |
|---|---|---|---|---|---|---|
| 1 | 1.671 | 2.668 | 18.8 | 446 | 0 | 381 |
| 2 | 1.672 | 2.677 | 19.1 | 445 | 0 | 378 |
| 3 | 1.679 | 2.685 | 19.0 | 442 | 0 | 378 |
| 4 | 1.674 | 2.675 | 19.2 | 449 | 0 | 383 |
| 5 | 1.673 | 2.681 | 18.9 | 447 | 0 | 382 |
| 6 | 1.668 | 2.674 | 19.5 | 440 | 19 | 304 |
| 7 | 1.672 | 2.672 | 19.2 | 443 | 22 | 313 |
| 8 | 1.679 | 2.699 | 19.5 | 451 | 16 | 298 |

Then, on the basis of the optimized chemical components (No. 1 to No. 5, Sn: 0.010∼0.10%, and the sum of the mass fractions of Ga and Hf ≤0.7%), the embodiment optimizes the annealing process. In the annealing process optimization, the slabs with chemical components of No. 1 to No. 5 are sequentially subjected to Step 2 and Step 3, and the primary cold-rolled coil obtained in Step 3 is annealed to obtain a non-oriented electrical steel. The process parameters controlled in the embodiment is shown in Table 3, Table 4 and Table 5, and the dislocation density of the non-oriented electrical steel is shown in Table 6. According to the requirements of GB/T 3655-2008, the magnetic property of the finished product of the primary cold-rolled coil after the annealing is tested by the Epstein frame method. According to the requirements of GB/T228.1, the mechanical properties of the specimens are tested by a universal tensile machine. According to the requirements of ISO 1099-2017, a dynamic mechanical testing machine is used to test the fatigue strength. The performance test results are shown in Table 6.

**Table 3**

| No. | Heating temperature, °C | Soaking time, min | Outlet temperature of rough rolling, °C | Starting temperature of finish rolling, °C | Finishing temperature of finish rolling, °C | Coiling temperature, °C | Thickness of hot-rolled coil, mm |
|---|---|---|---|---|---|---|---|
| 9 | 1060 | 45 | 1020 | 920 | 850 | 560 | 2.6 |
| 10 | 1030 | 43 | 980 | 890 | 860 | 600 | 2.6 |
| 11 | 1072 | 30 | 1030 | 980 | 910 | 720 | 2.6 |
| 12 | 1020 | 25 | 950 | 860 | 830 | 530 | 2.6 |
| 13 | 1015 | 48 | 1000 | 910 | 825 | 680 | 2.6 |
| 14 | 1080 | 40 | 1010 | 930 | 830 | 530 | 2.6 |

**Table 4**

| No. | Normalizing treatment | | | | Reduction ratio of primary cold rolling, % |
|---|---|---|---|---|---|
| | Normalizing temperature, °C | Holding time, min | Cooling rate, °C/s | Final cooling temperature, °C | |
| 9 | 900 | 1.5 | 35 | 50 | 86.54 |
| 10 | 856 | 4 | 16 | 48 | 86.54 |
| 11 | 935 | 0.8 | 22 | 80 | 86.54 |
| 12 | 890 | 3.5 | 20 | 93 | 86.54 |
| 13 | 920 | 2.3 | 30 | 65 | 86.54 |
| 14 | 880 | 1.8 | 25 | 85 | 86.54 |

**Table 5**

| No. | Continuous annealing | | | | | |
|---|---|---|---|---|---|---|
| | Annealing tension, MPa | Elongation, % | Cooling rate, °C/s | Continuous annealing temperature, °C | Soaking time | Final cooling temperature, °C |
| 9 | 2 | 1 | 15 | 950 | 0.9 | 50 |
| 10 | 5 | 2.5 | 60 | 920 | 0.5 | 80 |
| 11 | 10 | 6 | 60 | 980 | 1.2 | 60 |
| 12 | 15 | 8 | 60 | 960 | 1.8 | 95 |
| 13 | 10 | 6 | 30 | 910 | 1.1 | 75 |
| 14 | 10 | 6 | 80 | 950 | 1.2 | 60 |

**Table 6**

| No. | Dislocation density (Pieces /m²) | B5000 (T) | P1.5/50 (W/kg) | P1.0/400 (W/kg) | Rp0.2 (MPa) | Cold-rolled strip breakage rate (%) | Fatigue strength (MPa) |
|---|---|---|---|---|---|---|---|
| 9 | 10²∼10⁶ | 1.677 | 2.683 | 19.1 | 443 | 0 | 380 |
| 10 | 10¹⁴∼10¹⁵ | 1.671 | 2.672 | 19.9 | 464 | 0 | 386 |
| 11 | 10¹⁴∼10¹⁵ | 1.668 | 2.931 | 21.3 | 485 | 0 | 389 |
| 12 | 10¹⁴∼10¹⁵ | 1.665 | 2.967 | 21.8 | 501 | 0 | 411 |
| 13 | 10¹⁴∼10¹⁵ | 1.667 | 2.828 | 20.8 | 480 | 0 | 406 |
| 14 | 10¹⁴∼10¹⁵ | 1.665 | 2.935 | 21.5 | 492 | 0 | 408 |

According to the test results in Table 6, by increasing the annealing tension and cooling rate in the annealing furnace, the dislocation density of the non-oriented electrical steel increases, the yield strength is greatly improved, and the magnetic properties and iron loss slightly deteriorate.

In the end, on the basis of the annealing process optimization, the secondary cold rolling process is optimized. The slab, with the chemical components of No. 1 in Table 1, is heated at 1080°C and held for 30 minutes, and then subjected to rough rolling and finish rolling with an starting temperature of the finish rolling 920°C, a finishing temperature of the finish rolling 880°C, and a coiling temperature 560°C; a hot-rolled coil with a thickness of 2.6mm is obtained. After a normalizing treatment by heating at 920°C and holding for 60s, with a cooling rate of 30°C/s and a final cooling temperature of 60°C, the hot-rolled coil is acid pickled and a primary cold rolling in sequence to obtain a primary cold-rolled coil with a thickness of 0.35 mm∼0.50 mm. The reduction ratio of the primary cold rolling and the specific thickness of the primary cold-rolled coil are shown in Table 7. After an annealing process with a temperature of 950°C and a holding time of 30s, the primary cold-rolled coil is subjected to a second cold rolling to obtain a non-oriented electrical steel. The reduction ratio of the second cold rolling is shown in Table 7. The dislocation density of the non-oriented electrical steel is shown in Table 8. According to the requirements of GB/T 3655-2008, the magnetic properties of the finished products of the non-oriented electrical steel are tested by the Epstein frame method. According to the requirements of GB/T228.1, the mechanical properties of the specimens are tested by a universal tensile machine. According to ISO 1099-2017, the fatigue strength is tested by a dynamic mechanical testing machine. The performance test results are shown in Table 8.

**Table 7**

| No. | Thickness of primary cold-rolled coil (mm) | Reduction ratio of primary cold rolling (%) | Reduction ratio of secondary cold rolling (%) |
|---|---|---|---|
| 15 | 0.35 | 86.54 | 0 |
| 16 | 0.368 | 85.85 | 5 |
| 17 | 0.389 | 85.04 | 10 |
| 18 | 0.412 | 84.15 | 15 |
| 19 | 0.438 | 83.15 | 20 |
| 20 | 0.50 | 80.77 | 30 |

**Table 8**

| No. | Dislocation density (pieces/m²) | B5000 (T) | P1.5/50 (W/kg) | P1.0/400 (W/kg) | Rp0.2 (MPa) | Cold rolling strip breakage rate (%) | Fatigue strength (MPa) |
|---|---|---|---|---|---|---|---|
| 15 | 10¹⁴∼10¹⁵ | 1.677 | 2.683 | 19.1 | 443 | 0 | 402 |
| 16 | 10¹⁴∼10¹⁶ | 1.672 | 3.236 | 22.9 | 534 | 0 | 394 |
| 17 | 10¹⁵∼10¹⁶ | 1.656 | 3.931 | 27.6 | 688 | 0 | 413 |
| 18 | 10¹⁶∼10¹⁷ | 1.652 | 3.967 | 31.1 | 732 | 0 | 419 |
| 19 | 10¹⁶∼10¹⁷ | 1.649 | 4.289 | 36.2 | 780 | 0 | 531 |
| 20 | 10¹⁶∼10¹⁷ | 1.646 | 4.435 | 39.5 | 847 | 0 | 435 |

According to the data in Table 8, after the secondary cold rolling, the yield strength and fatigue strength of the non-oriented electrical steel have been greatly improved.

From the composition optimization, the annealing process optimization and the secondary cold rolling process optimization in the above-mentioned examples, it can be seen that the composition design of the disclosure, in combination with the annealing process and the secondary cold rolling process, ensures that the magnetic properties and iron loss of the non-oriented electrical steel do not deteriorate, and the cold rolling strip breakage rate during the rolling process is zero, the yield strength of the produced non-oriented electrical steel has been greatly improved, the fatigue strength is high, thus the overall performance of the non-oriented electrical steel has been improved. The non-oriented electrical steel used as the motor core, which can realize high-speed operation of the motor without fatigue failure and has long service life.

Finally, it should be noted that the terms "comprise", "include" or any other variants thereof are intended to cover a non-exclusive inclusion, so that a process, method, article or device including a series of elements not only include those elements, but also include other elements that are not explicitly listed, or including elements inherent to the process, method, article, or device.

Although the preferred embodiments of the disclosure have been described, those skilled in the art can make other changes and modifications to these embodiments once they learn the basic creative concept. Therefore, the appended claims are intended to be interpreted as covering the preferred embodiments and all changes and modifications falling within the scope of the disclosure.

Obviously, those skilled in the art can make various changes and modifications to the disclosure without departing from the spirit and scope of the disclosure. Therefore, if these modifications and changes of the disclosure fall within the scope of the claims of the application and their equivalent technologies, the application is also intended to cover these modifications and variations.

## Claims

1. A non-oriented electrical steel, chemical components and mass fractions of the chemical components of the non-oriented electrical steel are: C≤0.0040%; Si: 1.8∼4.00%; Al: 0.30∼1.20%; Mn: 0.40∼1.0%; Ni: 0.50∼2.0%; Cr: 0.50∼2.0%; Sn: 0.010∼0.10%; S≤0.0020%; N≤0.002%; V≤0.005%; Ti≤0.005%; P≤0.002%; a sum of the mass fractions of Ga and Hf ≤0.7%, and the rest is Fe and unavoidable impurities.

2. The non-oriented electrical steel according to claim 1, wherein the chemical components and the mass fractions of the chemical components of the non-oriented electrical steel are: C≤0.002%; Si: 2∼3.5%; Al: 0.4∼1.0%; Mn: 0.5∼0.7%; Ni: 0.6∼1.0%; Cr: 0.6∼1.0%; Sn: 0.02∼0.08%; S≤0.0015%; N≤0.002%; V≤0.005%; Ti≤0.005%; P≤0.002%; the sum of the mass fractions of Ga and Hf ≤0.7%, and the rest is Fe and unavoidable impurities.

3. A method for preparing non-oriented electrical steel, comprising:
casting molten steel sequentially subjected to converter smelting and vacuum treatment to obtain a slab, and chemical components and the mass fractions of the chemical components of the slab are: C≤0.0040%; Si: 1.8∼4.00%; Al: 0.30∼1.20%; Mn: 0.40∼1.0%; Ni: 0.50∼2.0%; Cr: 0.50∼2.0%; Sn: 0.010∼0.10%; S≤0.0020%; N≤0.002%; V≤0.005%; Ti≤0.005 %; a sum of the mass fractions of Ga and Hf≤0.7%, and the rest is Fe and inevitable impurities;
sequentially heating, rough rolling, finish rolling and coiling the slab to obtain a hot-rolled coil;
sequentially performing normalizing treatment, acid pickling and primary cold rolling on the hot-rolled coil to obtain a primary cold-rolled coil;
continuously annealing the primary cold-rolled coil to obtain the non-oriented electrical steel, and in the continuously annealing, an annealing tension is 5∼15MPa, an elongation is 0.5∼10%, a cooling rate is 30∼80°C/s, and a final cooling temperature is 40∼100°C.

4. The method for preparing non-oriented electrical steel according to claim 3, wherein in the heating, a heating temperature is 1000∼1080°C, and a soaking time is 20∼50min.

5. The method for preparing non-oriented electrical steel according to claim 3, wherein a starting temperature of the finish rolling is 850∼1000°C, a finishing temperature of the finish rolling is 820∼920°C, and a temperature of the coiling is 500∼750°C, and a thickness of the hot-rolled coil is 2.0 ∼ 2.6 mm.

6. The method for preparing non-oriented electrical steel according to claim 3, wherein in the normalizing treatment, a normalizing temperature is 850∼950°C, a holding time is 0.5∼4min, a cooling rate is 10∼40°C/s, and a final cooling temperature is 40∼100°C.

7. The method for preparing non-oriented electrical steel according to claim 3, wherein the continuously annealing the primary cold-rolled coil includes sequentially performing continuous annealing and secondary cold rolling on the primary cold-rolled coil, and a reduction ratio of the secondary cold rolling is 3-30%.

8. The method for preparing non-oriented electrical steel according to claim 3, wherein in the continuous annealing, a continuous annealing temperature is 900∼1000°C, and a soaking time is 0.3∼2 min.

9. The method for preparing non-oriented electrical steel according to claim 3, wherein a dislocation density of the non-oriented electrical steel is 1 × 10¹⁴ ∼ 1 × 10¹⁷ pieces/m².

10. An application of non-oriented electrical steel as motor core.
